# EUROPEAN PATENT SPECIFICATION

(11) **EP 1 863 671 B1**
(45) Date of publication and mention of the grant of the patent: **04.01.2012**
(21) Application number: 06717110.8
(22) Date of filing: 14.03.2006
(51) Int. Cl.: B60N 2/18, B60N 2/50

(54) **ADJUSTABLE SEAT CONSTRUCTION**
VERSTELLBARE SITZKONSTRUKTION
STRUCTURE DE SIÈGE RÉGLABLE

(30) Priority: 29.03.2005 SE 0500684
(43) Date of publication of application: 12.12.2007
(73) Proprietor: BE-GE Industri Aktiebolag, Box 912 S-572 29 Oskarshamn (SE)
(72) Inventor: MOBERG, Hans, S-570 90 Påskallavik (SE)
(74) Representative: Andréasson, Ivar
(86) International application number: PCT/SE2006/050026
(87) International publication number: WO 2006/104452

(56) References cited:
- WO-A1-2004/074735
- WO-A1-2004/074735
- DE-C1- 10 163 735
- DE-C1- 10 163 735
- GB-A- 191 408 965
- GB-A- 191 408 965
- JP-A- 56 131 432
- US-A- 5 676 424
- US-A- 5 676 424
- US-B1- 6 550 740
- US-B1- 6 550 740

## Description

### TECHNICAL FIELD

The present invention relates to an adjustable seat of scissor-type. The scissor type of seat is mainly used in vehicles like for instance busses and trucks. These types of seats present at least one of the advantages of vibration dampening, height adjustment and seat angle adjustments.

### BACKGROUND OF THE INVENTION

Adjustable seats using a scissor construction has been widely used for many years in vehicles such for instance busses and trucks. The scissor construction was primarily used in order to present a seat that can easily adjust its height and at the same time provide feasible vibration dampening properties. They are normally not used in personal cars since they are size demanding and since vibration dampening is less needed than in for instance construction vehicles. As seats have developed, getting better and better for each year passing by, increasing demands on further comfort for the users have been raised. For example the seat back in most vehicles can be altered to a preferred inclination, the seats have been cushioned, heating can be installed etc. One of the issues that nowadays is a key component in most variants of seats, is the possibility to adjust the inclination of the seat part. Several solutions to achieve a seat where the seat inclination can be altered by tilting the seat have been proposed. These includes variants where a separate tilt mechanism has been used or where the tilt mechanism has been integrated in the scissor construction. An advantage with an integrated tilt mechanism is that generally fewer components are needed for the adjustable seat reducing the cost of manufacture. Furthermore having fewer parts, the production speed can be increased and the possible error sources would be reduced. However integrating the tilt mechanism may provide other problems, for example it would be advantageous if the tilt angle is kept substantially constant when the height is adjusted, i.e. that height and tilt are adjusted separately.

US 5 676 424A describes an adjustable seat having a scissor construction together with an integrated tilt mechanism. DE 101 63 735 A presents a scissor construction with tilt adjustment. US 5 397 167 A describes a seat where the seat inclination can be altered, but without means for height adjustment. Furthermore WO 2004/074735 A describes yet another adjustable seat having a scissor construction and the ability to shift the inclination angle. An adjustable seat according to the preamble of claim 1 is described in JP-A-56131432.

### SUMMARY OF THE INVENTION

The adjustable seat of the invention presents an adjustable seat with integrated tilt mechanism providing several advantageous features. The total amount of components is reduced in relation to traditional scissor construction having separate tilt. Furthermore the tilt angle is kept substantially constant when adjusting the height. The adjustable seat of the invention comprises a lower frame which functions as a lower base fundament for the seat and an upper frame whereupon a seat can be arranged. A scissor construction is arranged between the lower frame and the upper frame in order to provide height adjustment, vibration dampening and tilt angle adjustment. The scissor construction preferably comprises two symmetric pairs of scissors arms. The scissor construction comprises a first scissor arm having its lower end articulated at the lower frame and its upper end articulated at the upper frame and a second scissor arm having its lower end articulated at the lower frame and its upper end being connected to the first scissor arm in a scissor joint.

According to further aspects of the invention:
- a tilt arm is at its lower end articulated at a second scissor arm at a distance from the scissor joint and the tilt arm is at its upper end is articulated at the upper frame.
- a tilt actuator is at its upper end together with the upper end of the tilt arm jointly articulated at the upper frame and the tilt actuator is at its lower end articulated at the second scissor arm.
- the tilt actuator and the tilt arm form a triangular shape in such way that the distance between their respectively lower pivot axes forms the base of the triangle and that their joint pivot axis at the upper frame forms the top of the triangle having a top angle.
- a lower pivot axis of the first scissor arm at the lower frame is arranged to be displaced within the lower frame within a height adjustment range, corresponding to an upward respectively downward displacement for the upper frame.
- The joint upper pivot axis of the tilt actuator and the tilt arm is arranged to be displaced within the upper frame within a height and tilt adjustment range, corresponding to an upward respectively downward displacement for the upper frame and a tilt angle adjustment of the upper frame.
- the tilt actuator can increase or decrease its length, thereby causing a tilt action for the upper name in relation to the lower frame adjusting the tilt angle.
- the positions of the plurality of pivot axes are arranged to keep the deviation of the maximum tilt angle below 15 %, preferably below 10%, when the height is adjusted between its extreme positions.
- the positions of the plurality of pivot axes are arranged to keep the deviation of the minimum tilt angle below 15 %, preferably below 10%, when the height of the seat is adjusted between its extreme positions.

The adjustable seat of the invention provides a height adjustable scissor construction having the advantage of an integrated tilt mechanism. Having the integrated tilt mechanism of the invention reduces the amounts of fixed and moveable parts compared to traditional scissor-type of seats having a tilt feature. A problem which may arise when integrating the tilt mechanism is to keep the tilt angle substantially equal during height adjustment. This problem is solved by the arrangement of the tilt arm and the tilt actuator at the second scissor arm. Still further advantages will be obvious in the light of the drawings and the detailed description.

### BRIEF DESCRIPTION OF THE DRAWINGS

Figure 1 shows a 3D view over the adjustable seat of the invention, and
Figure 2 shows a side view of the adjustable seat of the invention seen from the left hand side, and
Figure 3 shows tilt operation of the adjustable seat of the invention, and
Figure 4a shows the adjustable seat of the invention at its maximum height, and
Figure 4b shows the adjustable seat of the invention at its minimum height, and
Figure 5 shows a schematic overview over the link mechanism.

### DETAILED DESCRIPTION OF THE INVENTION

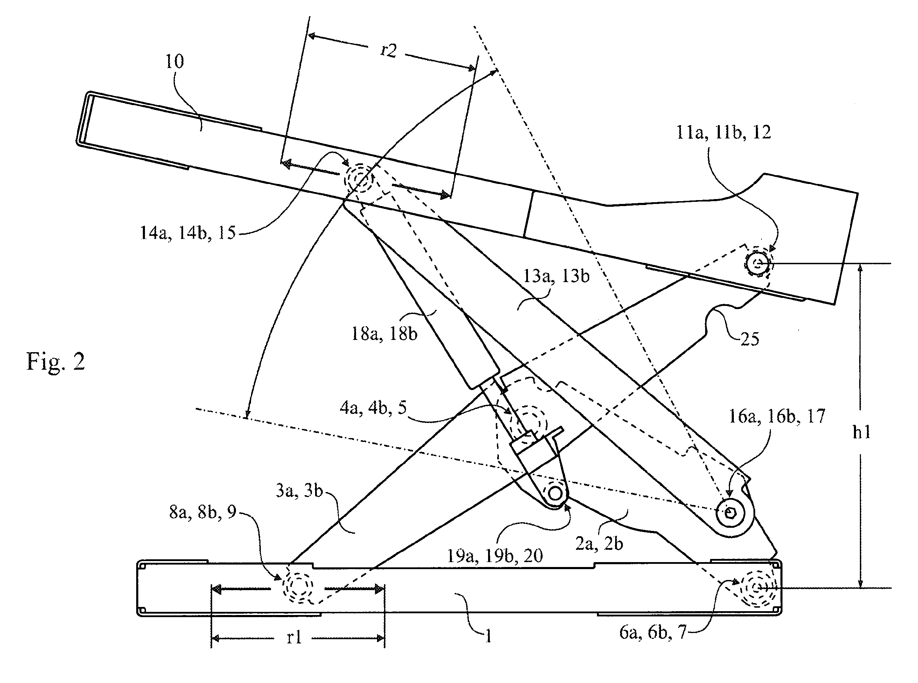

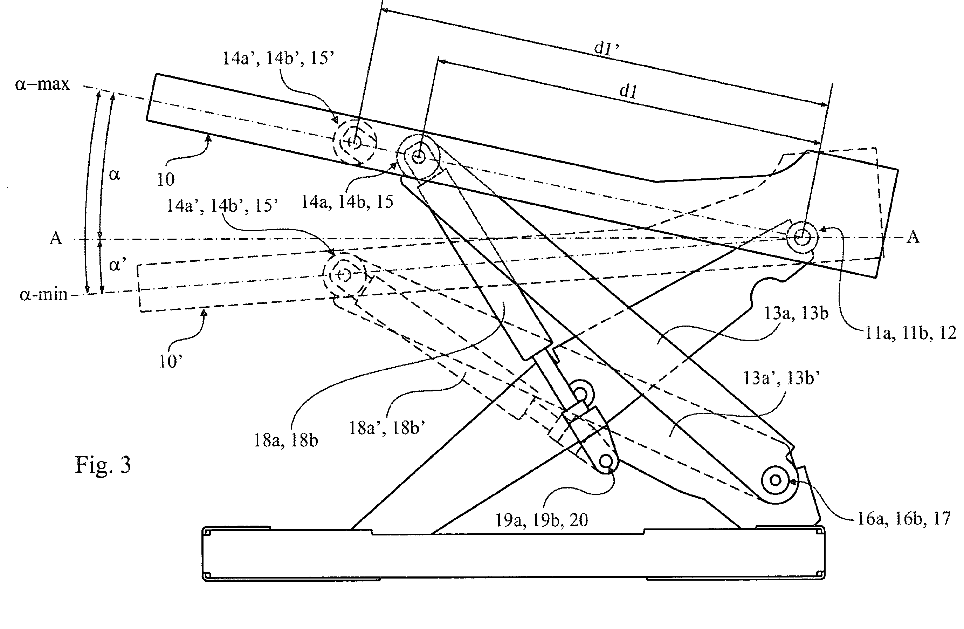

In figure 2 the adjustable scissor-type seat of the invention is shown from the left hand side of the seat. In these figures the mechanism for height adjustment as well as the means for vibration dampening is excluded from the drawings so as to focus on the central point of the invention, the tilt mechanism. The adjustable seat of the invention comprises a lower frame 1 which functions as a lower base fundament for the seat and an upper frame 10 whereupon a seat can be arranged. A scissor construction is arranged between the lower frame 1 and the upper frame 10 in order provide height adjustment h1, vibration dampening and tilt angle α adjustment (se figure 3). The scissor construction preferably comprises two symmetric pairs of scissor arms. Components having the denotation 'a' after its denotation number refer to the components on the left side of the adjustable seat and components having the denotation 'b' after its denotation number refer to the corresponding components of the right hand side of the adjustable seat. Thus even though the right hand side components cannot be seen, their numbers are depicted in the figures where symmetry applies.

Two pairs of scissor arms 2a, 3a; 2b, 3b are joined together at scissor joints 4a; 4b. A first horizontal pivot axis 5 is defined as an axis that extends in a direction perpendicular to the surface of the drawing through the scissor joints 4a; 4b.

The lower ends of the first scissor arms 3a; 3b are articulated in the front section of the lower frame 1 by first roller bearings 8a; 8b. A second horizontal pivot axis 9 is defined as an axis that extends in a direction perpendicular to the surface of the drawing through the first roller bearings 8a; 8b. The first roller bearings 8a; 8b allows the first scissor arms 3a; 3b to pivot around the second horizontal pivot axis 9. Furthermore the first roller bearings 8a; 8b can be displaced in a back and forward motion within the lower frame 1. The displacement of the first roller bearings 8a; 8b control the height adjustment h1 of the upper frame 10 and the range limiting the displacement is denoted the height adjustment range r1 In the preferred embodiment the height adjustment range r1 is 58 mm. The upper ends of the first scissor arms 3a; 3b are articulated at the back section of the upper frame 10 by first fixated rotary bearings 11a; 11b. A third horizontal pivot axis 12 is defined as an axis that extends in a direction perpendicular to the surface of the drawing through the first fixated rotary bearings 11a; 11b. Thus the first scissor arms 3a; 3b can pivot around the third horizontal pivot axis 12. In the middle part of the first scissor arms 3a, 3b the scissor joint 4a; 4b is arranged.

The upper ends of the second scissor arms 2a; 2b are articulated at the scissor joints 4a, 4b and the lower ends of the second scissor arms 2a; 2b are articulated at the back of the lower frame 1 by second fixated rotary bearings 6a; 6b. A fourth horizontal pivot axis 7 is defined as an axis that extends in a direction perpendicular to the surface of the drawing through the second fixated rotary bearings 6a; 6b. The second fixated rotary bearing 6a; 6b allows the second scissor arms 2a; 2b to pivot around the fourth horizontal pivot axis 7. The scissor joints 4a, 4b allows the scissor arms 2a, 3a; 2b, 3b to pivot around the first horizontal pivot axis 5.

One of the objectives of the invention is to provide the upper frame 10 with the ability to shift its tilt angle of the seat and at the same time allowing it to adjust its height and provide vibration dampening. The upper frame 10 provides articulations for the upper end of the first scissor arms 3a; 3b and the tilt arms 13a; 13b. The upper ends of the tilt arms 13a; 13b are articulated in the front section of the upper frame 10 by second roller bearings 14a; 14b. A fifth horizontal pivot axis 15 is defined as an axis that extends in a direction perpendicular to the surface of the drawing through the second roller bearings 14a; 14b. The second roller bearings 14a; 14b allows the tilt arms 13a; 13b to pivot around the fifth horizontal pivot axis 15 and the second roller bearings 14a; 14b can be displaced in a back and forward motion within the upper frame 10. The displacement of the second roller bearings 14a; 14b is correlated to the height adjustment h1 and the tilt angle α and the displacement is limited by a height and tilt adjustment range r2. In the preferred embodiment the tilt adjustment range r2 is 91 mm. The tilt angle α is seen in figure 3 and is defined as the angle between the upper frame 10 and the plane A-A parallel to the lower frame 1 passing through the third horizontal pivot axis 12.

The lower parts of the tilt arms 13a; 13b are articulated at the second scissor arms 2a; 2b by third fixated rotary bearings 16a; 16b at a distance d3 from the scissor joints 4a; 4b. A sixth horizontal pivot axis 17 is defined as an axis that extends in a direction perpendicular to the surface of the drawing through the third fixated rotary bearings 16a; 16b. Thus the tilt arms 13a; 13b can pivot around the sixth horizontal pivot axis 17.

Tilt actuators 18a; 18b are arranged at the second scissor arms 2a; 2b in order to control the tilt arms 13a; 13b and thereby the tilt angle α. The upper ends of the tilt actuators 18a; 18b are articulated at the second roller bearings 14a; 14b. The second roller bearings 14a; 14b allow the tilt actuators 18a; 18b to pivot around the fifth horizontal axis 15. The lower ends of the tilt actuators 18a; 18b are articulated to the second scissor arms 2a; 2b by fourth fixated rotary bearings 19a; 19b. A seventh horizontal pivot axis 20 is defined as an axis that extends in a direction perpendicular to the surface of the drawing through the fourth fixated rotary bearings 19a; 19b.Thus the tilt actuators 18a; 18b can pivot around a seventy horizontal pivot axis 20. The height h1 of the seat is defined as the vertical distance between the third horizontal pivot axis 12 and the fourth horizontal pivot axis 7.

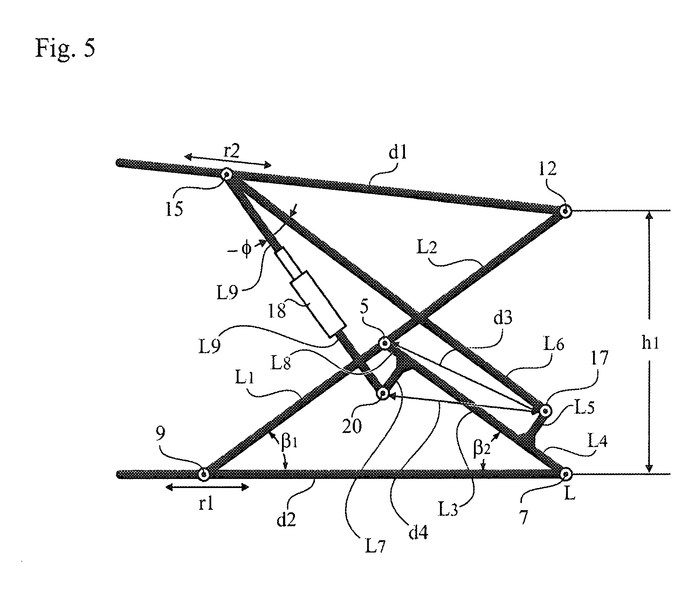

The tilt actuators 18a; 18b and the tilt arms 13a; 13b are arranged to form a triangle, where the upper ends of tilt actuators 18a; 18b and the tilt arms 13a; 13b meet at the fifth horizontal pivot axis 15 with a variable top angle ϕ (see figure 5) and the base of the triangle constituted by the distance d4 between seventh horizontal pivot axis 20 and the sixth horizontal pivot axis 17.

The tilt arms 13a; 13b protrude from the second scissor arms 2a; 2b by a protruding axle, coinciding with the sixth horizontal pivot axis 17, whereupon the third fixated rotary bearings are arranged. In the same fashion the link mechanism is arranged so that the tilt arms 13a; 13b are outermost, followed by the tilt actuators 18a; 18b, followed by first scissor arms 3a; 3b and finally the second scissor arms 2a, 2b being innermost among the link components. Of course this specific grouping is by no means necessary for the invention.

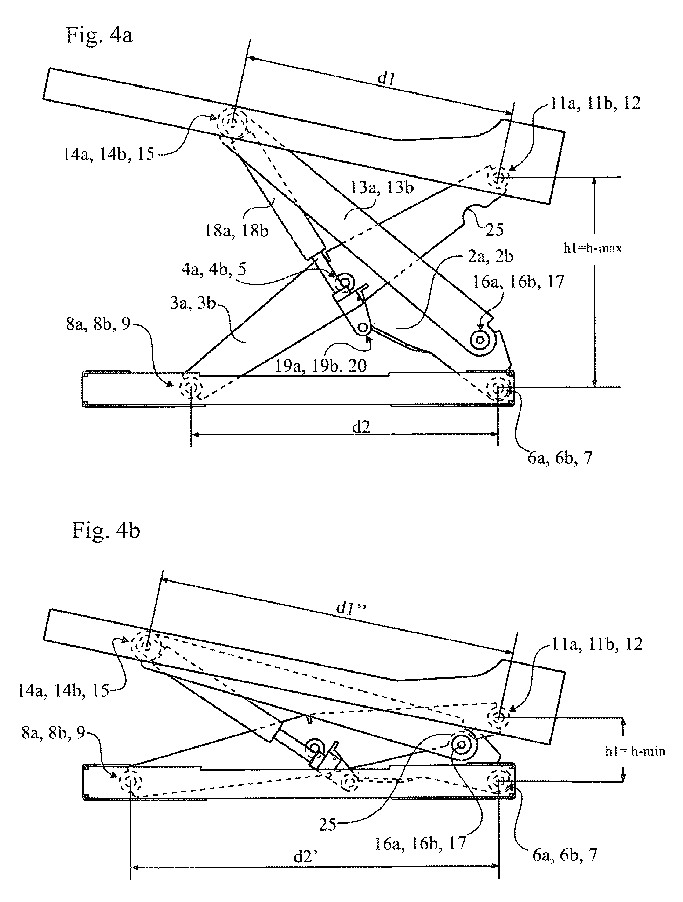

The concave part 25 of the first scissor arm 3a; 3b is arranged to meet the axis that protrudes from the second scissor arm 2a; 2b which upon the tilt arms 13a; 13b are articulated when the seat is lowered in position (se figure 4b).

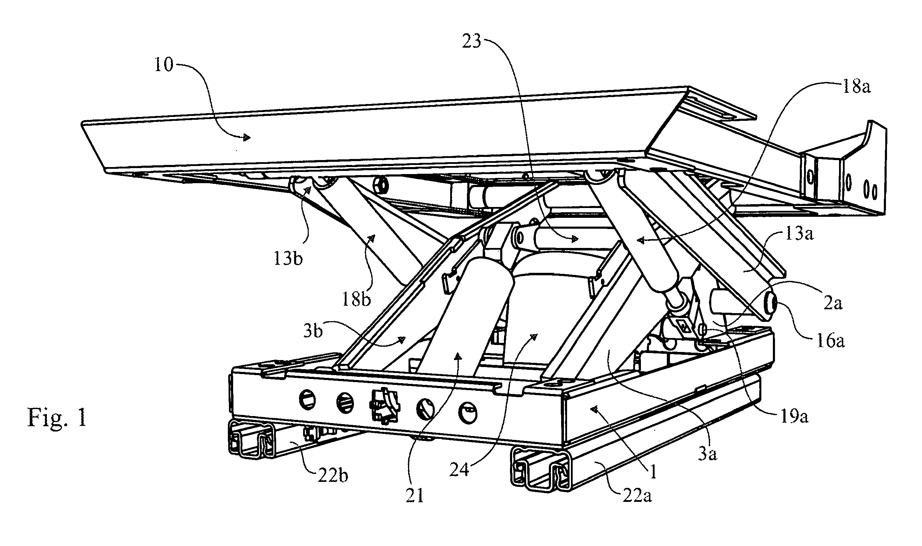

The height adjustment of the adjustable seat will now be described with reference to figure 4a and 4b. The height adjustment of the adjustable seat, i.e. the up and down movement, is in principle determined by the back and forward movement of the first roller bearings 8a; 8b, to which the first scissor arms 3a; 3b are articulated within the front section of the lower frame 1. Since the second scissor arms 2a; 2b are limited to pivot around the fourth horizontal pivot axis 7 and since they are joined at their upper ends by the scissor joints 4a; 4b to the first scissor arms 3a; 3b, the back and forward movement, restricted by the plane of lower frame 1, will cause an up and down movement for the top of the first scissor arm 3a; 3b, i.e. the articulation to the upper frame 10 by the first fixated rotary bearings 11a; 11b will cause the back of the upper frame 10 to move up and down. Thus the base height h1 of the adjustable seat is determined by the vertical displacement of the top of the first scissor arms 3a; 3b in relation to the lower frame 1 caused by the back and forward displacement of the first roller bearings 8a; 8b inside the lower frame 1. In the preferred embodiment the height adjustment is caused by the use of a height adjustment actuator 24 (se figure 1) at one end in connection to the lower frame and the other end connected to the scissor construction, e.g. the first scissor arms 3a, 3b at a connecting point situated above the scissor joints 4a, 4b. How and where a height adjustment actuator is installed is not within the scope of the invention, rather the invention presents a scissor construction where actuating means can be arranged in a wide variety of positions. The back and forward displacements are limited by the height adjustment range r1 (se figure 2) and the minimum distance d2 between the second horizontal pivot axis 9 and the fourth horizontal pivot axis 7 corresponds to the maximum height h-max and the maximum distance d2' between the second horizontal pivot axis 9 and the fourth horizontal pivot axis 7 corresponds to the minimum height h-min. In the preferred embodiment d2 = 287mm, d2' = 345mm, h-min = 60mm and h-max = 200mm. The actual height adjustment actuator 24 (se figure 1) is omitted from the figure. The height adjustment actuator 24 is preferably added to affect the first scissor arm 3a; 3b in order to control the height adjustment. The tilt actuators 18a; 18b and the tilt arms 13a; 13b are arranged at the second scissor arms 2a; 2b in such way as when adjusting the height the tilt angle α will change very little. The tilt angle α is seen in figure 3. In the preferred embodiment of the invention the minimum tilt angle α-min was -4° when the seat was at its lowest position h-min and when the seat was at its highest position h-max the minimum tilt angle α-min had deviated to -4,17°, i.e. a deviation of the minimum tilt angle below 5% from the seats lowest position h-min to its highest position h-max. The maximum tilt angle α-max was 12° when the seat was at its lowest position h-min and when the seat was at its highest position h-max the maximum tilt angle **α-**max had deviated to 13,18°, i.e. a deviation of the maximum tilt angle below 10% from the seats lowest position h-min to its highest position h-max. The distance d1" shows the distance between the fifth horizontal pivot axis 15' and the third horizontal pivot axis 12 when the seat is at its minimum height h-min and maximum tilt angle α-max. In the preferred embodiment the distance d1 "= 337mm.

The tilt operation of the adjustable seat will now be described with reference to figure 3. In order to understand the tilt operation the first roller bearings 8a; 8b (see figure 2) will be held fixated with respect to back and forward motions, i.e, the person adjusting the seat has adjusted the height of the seat and now wants to adjust the tilt angle α for an increased comfort. The tilt angle α is defined as the angle between the upper frame 10 and the plane A-A parallel to the lower frame 1 passing through the third horizontal pivot axis 12. The dotted lines in figure 3 indicate when the seat is in its lower tilt position and corresponding denotations have a prime sign after their numbers. By letting the tilt actuators 18a; 18b actuate to expand or decrease their length the tilt arms 13a; 13b will be affected due to their joint connection to the second roller bearings 14a; 14b. When expanding the length of the tilt actuators 18a; 18b the second roller bearings 14a; 14b roll backward along the plane of the upper frame 10. When the second roller bearings 14a; 14b move backward in the upper frame 10 the tilt arms 13a; 13b will cause a tilt action to the upper frame 10 raising the front part of upper frame 10 around the second horizontal pivot axis 12, as the tilt arms 13a; 13b pivot around the sixth horizontal pivot axis 17. When decreasing the length of the tilt actuators 18a; 18b the second roller bearings 14a; 14b roll forward along the plane of the upper frame 10. When the second roller bearings 14a; 14b move forward in the upper frame 10 the tilt arms 13a; 13b will cause a tilt action to the upper frame 10 lowering the front part of upper frame 10 around the second horizontal pivot axis 12, as the tilt arms 13a; 13b rotate around the sixth horizontal pivot axis 17. Thus the pivoting of tilt arms 13a; 13b around the sixth horizontal pivot axis 17 controls the pivoting of the upper frame 10 around the second horizontal pivot axis 12 and thereby the adjustment of the tilt angle α. When the tilt angle α' is at is minimum α-min the distance between the fifth horizontal pivot axis 15' and the third horizontal pivot axis 12 is d1 In the preferred embodiment d1 is 299 mm. As the tilt angle α reaches its maximum α-max the distance between the fifth horizontal pivot axis 15 and the third horizontal pivot axis 12 decreases to d1. In the preferred embodiment d1 is 255 mm. In order for the tilt actuators 18a; 18b to collaborate with the tilt arms 13a; 13b the variable top angle ϕ (see figure 5) must be larger than zero.

Figure 5 shows a schematic view of the link mechanism. It is to be understood that in this figure as in the previous figures the height adjustment actuator 24 and the shock absorber 21 (seen in figure 1) are omitted from the figures in order to simplify the explanation, so as to focus of the objectives of the invention. How to add the height adjustment actuator 24 and the shock absorber 21 is obvious to the skilled person and is part of the prior art. Some of the reference numerals have been removed in order to obtain a clearer drawing. The skilled person realises that the pivot axes (5, 7, 9, 12 ,15, 17) function as reference points from where the parts in the figure 1 to 4 can be inputted. For instance it is obvious that the length L6 - corresponds to the length of the tilt arm 13. In figure 5 the triangular link formation controlling the tilt angle α can be seen. The base of the triangular link formation is the distance d4 between the seventh horizontal pivot axis 20 and the sixth horizontal pivot axis 17 and the two remaining sides of the triangle is constituted by the tilt arm 13 having a length L6 and the tilt actuator 18 having a variable length L9. The top angle ϕ will vary as the tilt actuator 18 produces a decrease or increase in the length L9. In a preferred embodiment the lower part of the scissor substantially forms an isosceles triangle, i.e. where the top of the triangle is the joint at the pivot axis 5 and where the angles β1 and β2 are substantially equal and where L1 is substantially equal to L4+L3+L8. Furthermore it is preferred that the length L1 and the length L2 are substantially equal, i.e. the scissor joint 4a, 4b is arranged at the middle of the first scissor arm 3a, 3b. In the preferred embodiment L1=175 mm, L2=175 mm, L3=97 mm, L4=40 mm, L5=28 mm, L6=310mm, L7=25 mm, L8=38 mm, L9=208-229 mm, d3=138 mm, d4=111 mm.

Figure 1 shows a 3D drawing of the present invention including means for height adjustment, means for vibration dampening and back and forward displacement means. The lower frame 1 is attached to slideable rails 22a; 22b such that the seat can be adjusted back and forward. The height adjustment actuator 24 is at its lower end articulated to the lower frame 1 and at its upper end it is articulated to a plate (not seen in the figure) arranged in connection between the left first scissor arm 3a and the right first scissor arm 3b. Thus when the height adjustment actuator 24 actuates the scissor arms will be affected. Furthermore a shock absorber 21 is attached to dampen vibrations in the seat, where the upper part of the shock absorber 21 is connected to a horizontal shaft 23 arranged in connection to the upper part of the second scissor arms 2a; 2b and the lower part of the shock absorber 21 is arranged in connection to the lower part of the first scissor arms 3a;3b through a shaft (not seen in the figure). Further parts seen in the figure are numbered with same number as in previous figures.

The invention is not limited by what has been described above but may by the varied in the scope of the enclosed claims. In another embodiment one could consider to invert the back and front direction of the seat, i.e. letting the first fixated rotary bearings 11a; 11b and the second fixated rotary bearings 6a; 6b be at the front of the seat. The tilt actuator 18a, 18b could be implemented by use of a spring, a spring piston or any other type of actuating means having the property of increasing or decreasing its length. These type of scissors seats are mainly used in vehicles such as busses and trucks, they could of course be used anywhere such a seat is needed. Normally a cushioned seat is added to on top of the upper frame 10 as well as some sort of back support. The height and tilt can be controlled by the use of levers as well as other control means. In order to hold the seat in a certain height or tilt the tilt actuator respectively the height adjustment actuator could be locked and/ or the first and second roller bearings could be fixed at different positions. Of course the maximum tilt angle α-max and the minimum tilt angle α-min can be varied depending of several factors such as the variable length L9 of the tilt actuators 18a; 18b and the length L6 of the tilt arms 13a; 13b and how the lower ends of the tilt actuators 18a; 18b and the lower ends of the tilt arms 13a; 13b is arranged (L3, L4, L5, L7, L8) at the second scissor arms 2a; 2b. It is also to be understood that even though some desirable parts has been omitted from the drawings of figure 1 to 4, such as a height adjustment actuator 24 and a shock absorber 21, these parts are preferably added in practise. Thus they are omitted primary in order to focus on the main principles behind the invention. Of course the seat could be constructed with or without the shock absorber 21. It is also obvious that the distances and length of different parts are by means of example, these can of course be varied greatly still achieving the principles of the invention.

## Claims

1. Suspension seat for a vehicle comprising an upper frame (10) having an adjustable height (h1) and an adjustable tilt angle (α) in relation to a lower frame (1), and further comprising a first scissor arm (3a; 3b) having its lower end articulated at the lower frame (1) forming a second pivot axis (9) and its upper end articulated at the upper frame (10) forming a third pivot axis (12) and a second scissor arm (2a; 2b) having its lower end articulated at the lower frame (1) forming a fourth pivot axis (7) and being connected to the first scissor arm (3a; 3b) in a scissor joint (4a; 4b) forming a first pivot axis (5) and a tilt arm (13a; 13b) having its upper end articulated at the upper frame (10) forming a fifth pivot axis (15) **characterised in that** the tilt arm (13a; 13b) at its lower end is articulated at the second scissor arm (2a; 2b), at a first distance (d3) from the scissor joint (4a; 4b), forming a sixth pivot axis (17) and a tilt actuator (18a; 18b) for actuating the tilt arm (13a; 13b), where the tilt actuator (18a; 18b) at its upper end together with the upper end of the tilt arm (13a; 13b) are jointly articulated at the upper frame (10) and where the tilt actuator (18a; 18b) at its lower end is articulated at the second scissor arm (2a; 2b), at a second distance (d4) from the lower end of the tilt arm (13a; 13b), forming a seventh pivot axis (20).

2. Suspension seat according to claim 1 **characterised in that** the angle (ϕ) between the tilt arm (13a; 13b) and the tilt actuator (18a; 18b) at their joint articulation at the upper frame (10) is always kept larger than zero during the operation of the seat.

3. Suspension seat according to any claim above **characterised in that** the second pivot axis (9) of the first scissor arm (3a; 3b) at the lower frame (1) is arranged to be displaced within the lower frame (1) within a height adjustment range (r1), corresponding to the adjustment of the height (h1) of the upper frame (10).

4. Suspension seat according to any claim above **characterised in that** the joint fifth pivot axis (15) of the tilt actuator (18a; 18b) and the tilt arm (13a; 13b) is arranged to be displaced within the upper frame (10) within a height and tilt adjustment range (r2), corresponding to the adjustment of the height (h1) and the adjustment of the tilt angle (α) of the upper frame (10).

5. Suspension seat according to any claim above **characterised in that** the tilt actuator (18a; 18b) can increase or decrease its length, thereby causing a tilt action for the upper frame (10) in relation to the lower frame (1) adjusting the tilt angle (α).

6. Suspension seat according to any claim above **characterised in that** the positions of the plurality of pivot axes (7, 9, 12, 15, 17, 20) are arranged to keep the deviation of the maximum tilt angle (α-max) below 15 %, preferably below 10%, when the height (h1) of the upper frame (10) is adjusted between its extreme positions (h-min, h-max).

7. Suspension seat according to any claim above **characterised in that** the positions of the plurality of pivot axes (7, 9, 12, 15, 17, 20) are arranged to keep the deviation of the minimum tilt angle (α-min) below 15 %, preferably below 10%, when the height (h1) of the upper frame (10) is adjusted between its extreme positions (h-min, h-max).

## Patentansprüche

1. Gefederter Sitz für ein Fahrzeug, umfassend:
einen oberen Rahmen (10) mit einer einstellbaren Höhe (h1) und einem einstellbaren Neigungswinkel (α) in Beziehung zu einem unteren Rahmen (1), und weiter umfassend
einen ersten Scherenarm (3a, 3b), dessen unteres Ende an dem unteren Rahmen (1) angelenkt ist, wodurch eine zweite Schwenkachse (9) gebildet wird, und dessen oberes Ende an dem oberen Rahmen (10) angelenkt ist, wodurch eine dritte Schwenkachse (12) gebildet wird, und
einen zweiten Scherenarm (2a, 2b), dessen unteres Ende an dem unteren Rahmen (1) angelenkt ist, wodurch eine vierte Schwenkachse (7) gebildet wird, und mit dem ersten Scherenarm (3a, 3b) in einem Scherengelenk (4a, 4b) verbunden ist, wodurch eine erste Schwenkachse (5) gebildet wird, und
einen Neige-Arm (13a, 13b), dessen oberes Ende an dem oberen Rahmen (10) angelenkt ist, wodurch eine fünfte Schwenkachse (15) gebildet wird,
**dadurch gekennzeichnet, dass**
der Schwenkarm (13a, 13b) an seinem unteren Ende in einem ersten Abstand (d3) von dem Scherengelenk (4a, 4b) an dem zweiten Scherenarm (2a, 2b) angelenkt ist,
wodurch eine sechse Schwenkachse (17) gebildet wird, und
einem Neigungs-Alctuator (18a, 18b), um den Neige-Arm (13a, 13b) zu betätigen,
wobei der Neigungs-Aktuator (18a, 18b) an seinem oberen Ende zusammen mit dem oberen Ende des Neigearms (13a, 13b) gemeinsam an dem oberen Rahmen (10) angelenkt ist, und
wobei der Neigungs-Aktuator (18a, 18b) an seinem unteren Ende mit einem Abstand (d4) von dem unteren Ende des Neigearms (13a, 13b) an dem zweiten Scherenarm (2a, 2b) angelenkt ist, wodurch eine siebte Schwenkachse (20) gebildet wird.

2. Gefederter Sitz gemäß Anspruch 1, **dadurch gekennzeichnet, dass** der Winkel (ϕ) zwischen dem Neigearm (13a, 13b) und dem Neigungs-Aktuator (18a, 18b) an ihrer gemeinsamen Anlenkung an dem oberen Rahmen (10) während des Betriebs des Sitzes immer größer als Null gehalten wird.

3. Gefederter Sitz gemäß einem der vorstehenden Ansprüche, **dadurch gekennzeichnet, dass** die zweite Schwenkachse (9) des ersten Scherenarms (3a, 3b) an dem unteren Rahmen (1) eingerichtet ist, um innerhalb des unteren Rahmens (1) innerhalb eines Höhen-Einstellbereichs (r1)entsprechend der Einstellung der Höhe (h1) des oberen Rahmens (10) versetzt zu werden.

4. Gefederter Sitz gemäß einem der vorstehenden Ansprüche, **dadurch gekennzeichnet, dass** die gemeinsame fünfte Schwenkachse (15) des Neigungs-Aktuators (18a, 18b) und des Neigearms (13a, 13b) eingerichtet ist, um innerhalb des oberen Rahmens (10) innerhalb eines Höhen-und Neigungs-Einstellbereichs (r2) entsprechend der Einstellung der Höhe (h1) und der Einstellung des Neigungswinkels (α) des oberen Rahmens (10) versetzt zu werden.

5. Gefederter Sitz gemäß einem der vorstehenden Ansprüche, **dadurch gekennzeichnet, dass** der Neigungs-Aktuator (18a, 18b) seine Länge vergrößern und verkleinern kann und dadurch einen Neigungsvorgang des oberen Rahmens (10) in Bezug auf den unteren Rahmen (1) unter Einstellung des Neigungswinkel (α) bewirkt.

6. Gefederter Sitz gemäß einem der vorstehenden Ansprüche, **dadurch gekennzeichnet, dass** die Positionen der mehreren Schwenkachsen (7, 9, 12, 15, 17, 20) eingerichtet sind, um die Abweichung des maximalen Neigungswinkels (α-max) unter 15%, vorzugsweise unter 10% zu halten, wenn die Höhe (h1) des oberen Rahmens (10) zwischen ihren Endstellungen (h-min, h-max) eingestellt wird.

7. Gefederter Sitz gemäß einem der vorstehenden Ansprüche, **dadurch gekennzeichnet, dass** die Positionen der mehreren Schwenkachsen (7, 9, 12, 15, 17, 20) eingerichtet sind, um die Abweichung des minimalen Neigungswinkels (α-min) unter 15%, vorzugsweise unter 10% zu halten, wenn die Höhe (h1) des oberen Rahmens (10) zwischen ihren Endstellungen (h-min, h-max) eingestellt wird.

## Revendications

1. Siège à suspension pour un véhicule comprenant un châssis supérieur (10) ayant une hauteur ajustable (h1) et un angle d'inclinaison ajustable (α) par rapport à un châssis inférieur (1), et comprenant en outre un premier bras à ciseaux (3a ; 3b) ayant son extrémité inférieure articulée au niveau du châssis inférieur (1) formant un deuxième axe de pivot (9) et son extrémité supérieure articulée au niveau du châssis supérieur (10) formant un troisième axe de pivot (12) et un deuxième bras à ciseaux (2a ; 2b) ayant son extrémité inférieure articulée au niveau du châssis inférieur (1) formant un quatrième axe de pivot (7) et étant raccordé au premier bras à ciseaux (3a ; 3b) dans un joint à ciseaux (4a ; 4b) formant un premier axe de pivot (5) et un bras d'inclinaison (13a; 13b) ayant son extrémité supérieure articulée au niveau du châssis supérieur (10) formant un cinquième axe de pivot (15), **caractérisé en ce que** le bras d'inclinaison (13a ; 13b), au niveau de son extrémité inférieure, est articulé au niveau du deuxième bras à ciseaux (2a ; 2b), à une première distance (d3) du joint à ciseaux (4a ; 4b), formant un sixième axe de pivot (17) et un actionneur d'inclinaison (18a 18b) pour actionner le bras d'inclinaison (13a; 13b), dans lequel l'actionneur d'inclinaison (18a; 18b), au niveau de son extrémité supérieure conjointement avec l'extrémité supérieure du bras d'inclinaison (13a ; 13b), est articulé conjointement au niveau du châssis supérieur (10) et dans lequel l'actionneur d'inclinaison (18a; 18b), au niveau de son extrémité inférieure, est articulé au niveau du deuxième bras à ciseaux (2a ; 2b), à une deuxième distance (d4) de l'extrémité inférieure du bras d'inclinaison (13a; 13b), formant un septième axe de pivot (20).

2. Siège à suspension selon la revendication 1, **caractérisé en ce que** l'angle (ϕ) entre le bras d'inclinaison (13a ; 13b) et l'actionneur d'inclinaison (18a ; 18b) au niveau de leur articulation de joint sur le châssis supérieur (10), est toujours maintenu à une valeur supérieure à zéro pendant le fonctionnement du siège.

3. Siège à suspension selon l'une quelconque des revendications précédentes, **caractérisé en ce que** le deuxième axe de pivot (9) du premier bras à ciseaux (3a ; 3b) au niveau du châssis inférieur (1), est agencé pour être déplacé dans le châssis inférieur (1) dans une plage d'ajustement de hauteur (r1) correspondant à l'ajustement de la hauteur (h1) du châssis supérieur (10).

4. Siège à suspension selon l'une quelconque des revendications précédentes, **caractérisé en ce que** le cinquième axe de pivot (15) de joint de l'actionneur d'inclinaison (18a ; 18b) et du bras d'inclinaison (13a ; 13b), est agencé pour être déplacé dans le châssis supérieur (10) dans une plage d'ajustement de hauteur et d'inclinaison (r2), correspondant à l'ajustement de la hauteur (h1) et à l'ajustement de l'angle d'inclinaison (α) du châssis supérieur (10).

5. Siège à suspension selon l'une quelconque des revendications précédentes, **caractérisé en ce que** l'actionneur d'inclinaison (18a ; 18b) peut augmenter ou diminuer sa longueur, provoquant ainsi une action d'inclinaison pour le châssis supérieur (10) par rapport au châssis inférieur (1) ajustant l'angle d'inclinaison (α).

6. Siège à suspension selon l'une quelconque des revendications précédentes, **caractérisé en ce que** les positions de la pluralité d'axes de pivot (7, 9, 12, 15, 17, 20) sont agencées pour maintenir la déviation de l'angle d'inclinaison maximum (α-max) inférieure à 15%, de préférence inférieure à 10%, lorsque la hauteur (h1) du châssis supérieur (10) est ajustée entre ses positions extrêmes (h-min, h-max).

7. Siège à suspension selon l'une quelconque des revendications précédentes, **caractérisé en ce que** les positions de la pluralité d'axes de pivot (7, 9, 12, 15, 17, 20) sont agencées pour maintenir la déviation de l'angle d'inclinaison minimum (α-min) inférieure à 15%, de préférence inférieure à 10%, lorsque la hauteur (h1) du châssis supérieur (10) est ajustée entre ses positions extrêmes (h-min, h-max).
